# EUROPEAN PATENT SPECIFICATION

(11) **EP 1 113 047 B1**
(45) Date of publication and mention of the grant of the patent: **16.03.2005**
(21) Application number: 00311716.5
(22) Date of filing: 27.12.2000
(51) Int. Cl.: C08L 77/00, G03G 5/10

(54) **Mixed resin compound, resin pipe, production of resin pipe, and photosensitive drum**
Gemischte Harzzusammensetzung, Rohr aus Harz, die Herstellung von einem Rohr aus Harz und eine lichtempfindliche Trommel
Composition de résine melangeé, tuyau en résine, procédé pour la préparation d'un tuyau de résine et un tambour photosensible

(30) Priority: 27.12.1999 JP 36977799; 27.12.1999 JP 36977899; 27.12.1999 JP 36977999; 27.12.1999 JP 36978099; 27.12.1999 JP 36978199; 27.12.1999 JP 36978299; 27.12.1999 JP 36978399; 27.12.1999 JP 36978499
(43) Date of publication of application: 04.07.2001
(60) Divisional application: 02003883.2
(73) Proprietor: Bridgestone Corporation, Tokyo (JP)
(72) Inventor: Iizuka, Munenori, Kodaira-shi, Tokyo (JP); Machida, Kunio, Suginami-ku, Tokyo (JP)
(74) Representative: Stoner, Gerard Patrick

(56) References cited:
- EP-A- 0 644 467
- EP-A- 0 984 330
- EP-A- 1 046 674
- DE-A- 19 847 696
- US-A- 3 080 345
- US-A- 4 702 859
- US-A- 5 319 039
- US-A- 5 681 524
- PATENT ABSTRACTS OF JAPAN vol. 1998, no. 13, 30 November 1998 (1998-11-30) & JP 10 217291 A (BRIDGESTONE CORP), 18 August 1998 (1998-08-18)
- PATENT ABSTRACTS OF JAPAN vol. 2000, no. 06, 22 September 2000 (2000-09-22) & JP 2000 075529 A (BRIDGESTONE CORP), 14 March 2000 (2000-03-14)
- DATABASE WPI Section Ch, Week 199038 Derwent Publications Ltd., London, GB; Class A28, AN 1990-286361 XP002166020 & JP 02 201811 A (NIPPON GE PLASTICS KK), 10 August 1990 (1990-08-10)

## Description

### BACKGROUND OF THE INVENTION

The present invention relates to a mixed resin compound, a resin pipe, a process for production of said resin pipe, and a photosensitive drum. The photosensitive drum is used for electrophotographic apparatus such as copying machines, facsimiles, and printers.

The electrostatic recording process for copying machines, facsimiles, and printers consists of several steps. First, the photosensitive drum has its surface electrostatically charged uniformly. The charged surface of the photosensitive drum is exposed to an image projected from an optical system. The exposed part loses charge, thereby forming an electrostatic latent image, which is subsequently supplied with a toner. The toner electrostatically sticks to the photosensitive drum, thereby forming a toner image. Finally, the toner image is transferred for printing to a recording medium such as paper, OHP, photographic paper.

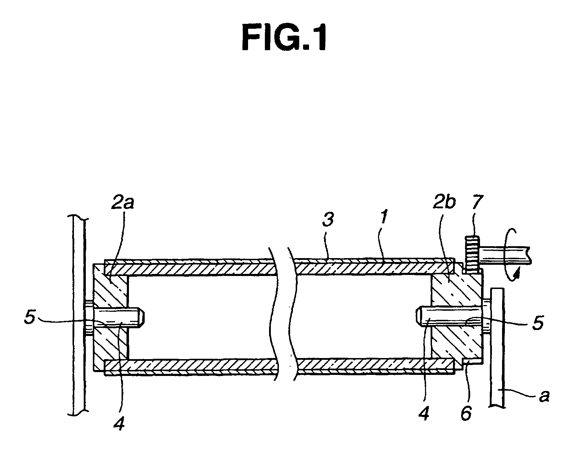

The above-mentioned electrostatic recording process usually employs a photosensitive drum, which consists of a cylindrical base having good conductivity, flanges firmly fitted into both ends of thereof, and a photosensitive layer formed on the outer surface thereof, as shown in Fig. 1. The photosensitive drum is rotatably supported by shafts, which are inserted into holes in the flanges and attached to the main body a of the electrophotographic apparatus. The photosensitive drum is turned by a motor through a driving gear and a driven gear formed on the flange.

The above-mentioned cylindrical base is conventionally made of aluminum alloy on account of its light weight, good machinability, and high conductivity.

Unfortunately, the cylindrical base of aluminum alloy needs precision machining to meet stringent requirements, such as dimensional accuracy and prescribed surface roughness, and to permit the flanges to fit into its ends. It occasionally needs treatment to prevent its surface oxidation. Such additional processes lead to high production cost, and hence aluminum alloy is not necessarily a satisfactory material for the cylindrical base constituting the photosensitive drum.

Meanwhile, there has been proposed an idea of making the cylindrical base from a resin compound composed mainly of polyphenylene sulfide (PPS) resin. According to this idea, it is possible to produce a light cylindrical base superior in chemical and heat resistance comparatively easily by injection molding. It is also possible to form either of the flanges 2a and 2b integrally with the cylindrical base from the same resin compound.

The PPS-based resin compound as a raw material for the cylindrical base 1 of the photosensitive drum needs to contain equal to or more than 20 weight% of carbon black to impart electrical conductivity. With such a high content of carbon black, the PPS-based resin compound is very brittle and hence needs reinforcement with glass fiber or the like, so that the resulting cylindrical base possesses required strength.

The above-mentioned conventional technology, however, has at least the following problem to be solved.

The PPS-based resin compound incorporated with a large amount of carbon black and reinforcing fiber is extremely poor in flowability when it is melted. Consequently, it is poor in surface transferability at the time of injection molding, and the resulting cylindrical base is poor in surface smoothness. This is disadvantageous to forming the photosensitive layer on its surface.

### SUMMARY OF THE INVENTION

The present invention was completed in view of the foregoing. It is an object of the present invention to provide a resin compound which gives a smooth surface even when it is incorporated with carbon black or fibrous reinforcement and also to provide a photosensitive drum whose base is made of said resin compound.

In order to achieve the object mentioned above, the present inventors carried out experiments to find that a polyamide resin obtained from metaxylylenediamine and adipic acid or from ε-caprolactam exhibits good heat resistance, chemical resistance, and mechanical strength and readily forms a skin layer on the surface of its molded product even when it is incorporated with carbon black (as an electrically conducting material) because of its lower rate of crystallization than other crystalline resins. Therefore, this polyamide resin gives a molded product suitable for use as the base of the photosensitive drum because of its smooth surface. This finding led the present inventors to propose a resin compound based on said polyamide. (European Patent Application EP 0 984 330 A1).

The present inventors continued their research to find that any injection-molded product (such as the base of the photosensitive drum) obtained from a mixture of two polyamide resins with a different rate of crystallization varies in surface smoothness depending on how they are mixed. (The above-mentioned polyamide resin is slow in crystallization.) In order to obtain injection-molded products with better surface smoothness, the present inventors investigated the method of mixing more than one resin. It was found that injection molding from a mixture of resins (differing in the rate of crystallization) in their pellet form gives rise to molded products with a skin layer resulting from the slow-crystallizing resin.

A resin mixture for injection molding is usually prepared by melt-mixing from resins (each in pellet form) fed together into a mixing machine (such as twin-screw extruder). Usually, one of these resins is previously mixed with an electrically conductive material and a reinforcing material. The extrudate is pelletized. The resulting pellets are a uniform mixture of more than one resin. They undergo injection molding to give molded products of uniform resin mixture. Instead of following the above-mentioned conventional practice, the present inventors carried out injection molding without preliminary mixing by a twin-screw extruder or the like. In other words, more than one resin in pellet form were dry-blended by using a tumbler or a similar mixing machine, and the resulting mixture (in pellet form) was fed into the injection molding machine. The thus obtained resin mixture in pellet form contains the different resins in their incompletely dispersed state. In other words, the slow-crystallizing resin, which contributes to the improved surface state of the molded product, does not disperse evenly but concentrates at the surface of the molded product. In this way it is possible to obtain molded products superior in surface smoothness owing to the skin layer of the slow-crystallizing resin.

The present invention provides a mixed resin compound, and a photosensitive drum, which are explained in the following.

The present invention is directed to a mixed resin compound in a desired shape formed by injection molding from a molding material containing a mixed resin comprising (A) at least one resin component selected from a polyamide resin obtained from metaxylylenediamine and adipic acid, a polyamide resin obtained from ε-caprolactam, and an alloy resin obtained by blending a polyamide resin with a resin having a water absorption, measured according to ASTM. D-570, no higher than 0.3%, and (B) at least one other resin having a different rate of crystallization to that in (A), wherein said resins are mixed in pellet form and the resulting mixture of pellets is injection-molded as such.

### BRIEF DESCRIPTION OF THE DRAWING

Fig. 1 is a schematic sectional view showing one example of the photosensitive drum.

### DETAILED DESCRIPTION OF THE PREFERRED EMBODIMENTS

A detailed description of the invention follows.

The resin material having a lower rate of crystallization forms a skin layer in the surface of the molded product. Preferably, it should be the at least one kind of resin selected from a polyamide resin obtained from metaxylylenediamine and adipic acid, a polyamide resin obtained from ε-caprolactam, and an alloy resin obtained by blending a polyamide resin with a resin having a water absorption no higher than 0.3%. This resin is desirable because it gives a skin layer superior in heat resistance, chemical resistance, and mechanical strength. This polyamide resin (PA) gives the cylindrical base for the photosensitive drum having good surface smoothness even though it is incorporated with a large amount of electrically conducting material and reinforcing material to impart electrical conductivity and to improve mechanical strength.

The polyamide resin obtained from metaxylylenediamine and adipic acid by polycondensation reaction is what is generally called nylon MXD6. The polyamide resin obtained from ε-caprolactam by ring-opening polymerization reaction is what is generally called nylon-6.

The alloy resin obtained by blending the polyamide resin with a resin having a water absorption no higher than 0.3% is desirable for the following reasons.

There has been proposed an idea of forming the cylindrical base from a polyamide-based electrically conductive resin. The polyamide resin (PA) for this purpose has a higher water absorption (measured according to ASTM D-570) than other resins. For example, PA66 has a value of 0.6-3% and PA6 has a value of 0.7-1.8%. Molded products with such a high water absorption may pose a problem with dimensional accuracy. That is, they expand due to water absorption when they are allowed to stand in an atmosphere at 30°C and above and 90 %RH and above for 2-3 hours. Expansion may adversely affect the function of the photosensitive body and hence greatly aggravates the image quality.

According to the present invention, the polyamide resin having a high water absorption is blended with a resin having a water absorption no higher than 0.3%, and the resulting resin alloy is used as the base material. The resulting resin compound has a low water absorption and is little subject to dimensional change in a high-temperature high-humidity environment.

The polyamide resin for the resin alloy may be any known polyamide resin, such as nylon MXD6, nylon-6, nylon-11, nylon-12, nylon-46, nylon-66, nylon-610, nylon-612, nylon-1212, and copolymers thereof. There are no specific restrictions on their selection.

The low water absorption resin for the resin alloy (referred to as the blending resin) includes PP (polypropylene), PPE (polyphenylene ether), and PPS (polyphenylene sulfide) and the like, with the second and third being preferable and the second being most desirable.

The resin alloy according to the present invention may be obtained by blending the polyamide resin (such as PA66) with the blending resin in an amount of 1-70 weight%, preferably 5-50 weight%, and more preferably 10-40 weight%.

Blending may be facilitated by the aid of a compatibilizing agent to improve the compatibility of the two resin components. Good compatibility contributes to good mechanical properties (mechanical strength), low water absorption, and high chemical resistance. Examples of the compatibilizing agent include maleic acid-modified polypropylene (PP) for the PA-PP system and a copolymer of epoxy-modified polystyrene (PS) and polymethyl methacrylate (PMMA) for the PA-PPS or PA-PPE system.

The resin alloy composed of the polyamide resin and the blending resin gives a molded product which has better dimensional stability than that obtained from the polyamide resin alone, as mentioned above. This is demonstrated by Referential Examples as shown in Table 1 below. The water absorption and dimensional change in Table 1 are expressed in terms of difference between values measured before and after standing for 24 hours in a constant-temperature constant-humidity bath at 50°C and 95 %RH. It is noted that the water absorption and dimensional stability of the molded product are greatly improved when the polyamide resin is blended with the blending resin having a low water absorption.

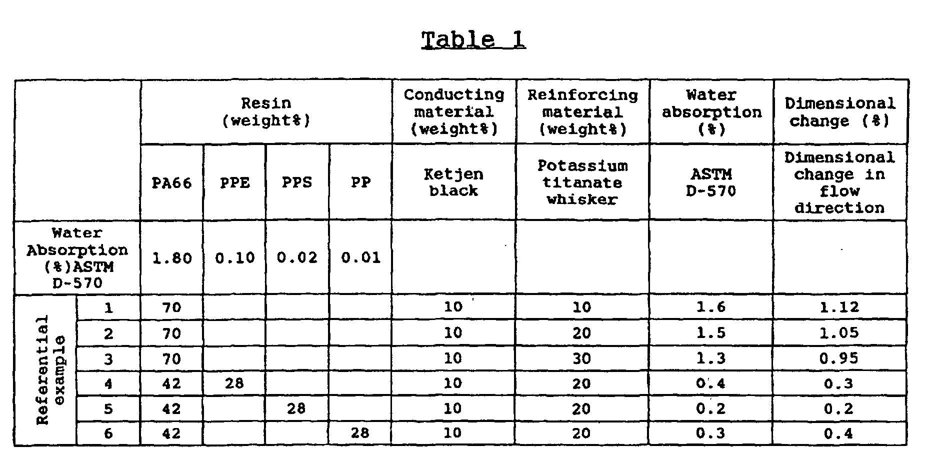

The above-mentioned nylon MXD6, nylon-6 and/or the alloy resin obtained by blending the polyamide resin with a resin having a water absorption of 0.3 % or less is combined with a resin having a higher rate of crystallization. This resin is the base resin (quantity-wise and quality-wise) of the mixed resin compound pertaining to the present invention. It is selected adequately according to uses. It is not specifically restricted; however, it should preferably be nylon-11, nylon-12, nylon-46, nylon-66, nylon-610, nylon-612, nylon-1212, or a copolymer thereof. These polyamide resins are recommended in the case where the cylindrical base for the photosensitive drum is intended.

The mixing ratio of these resin components is not specifically restricted; it should be established according to the kind of the resin used and the use of the mixed resin compound. In the case where the cylindrical base for the photosensitive drum is formed from a mixture of the nylon MXD6 nylon-6 and/or the alloy resin obtained by blending the polyamide resin with a resin having a water absorption of 0.3 % or less with the above-mentioned other polyamide resin, the amount of the former is usually 5-40 parts by weight, particularly 10-25 parts by weight, and the amount of the latter is 100 parts by weight.

The mixed resin compound according to the present invention may be incorporated with an electrically conducting material to impart electrical conductivity according to use. The electrically condutive material is not specifically restricted so long as it is capable of uniform dispersion into the above-mentioned resin. It includes, for example, carbon black, graphite, aluminum powder, copper powder, nickel powder, and electrically conductive glass powder. Carbon black is preferable. The amount of the electrically conductive material is not specifically restricted; it may range from 5 to 30 weight%, particularly 5-20 weight%, of the compound. In the case where the resin compound is intended for the cylindrical base of the photosensitive drum, the amount of the electrically conductive material should be adjusted such that the resulting molded product has a surface resistance equal to or lower than 10⁶ Ω/□, preferably equal to or lower than 10⁵ Ω/□, more preferably equal to or lower than 10⁴ Ω/□.

In addition, the resin compound may be incorporated with a variety of inorganic fillers (such as fibers) for reinforcement and extension. Examples of inorganic fillers include carbon fiber, electrically conductive or nonconductive whisker, and electrically conductive or nonconductive glass fiber. The electrically conductive fibers may also serve as the conducting material. In the case where electrically conductive fiber is used, the conducting material should be used in a reduced amount.

The inorganic filler is used in varied amounts without restrictions according to its kind and fiber length and diameter. It should be added in an amount of 1-30 weight%, preferably 5-25 weight%, more preferably 10-25 weight%, of the resin compound. According to the present invention, the inorganic filler remarkably improves the strength and stiffness of the molded produce without adverse effect on its surface smoothness.

The above-mentioned mixed resin compound may be incorporated with, in addition to the above-mentioned conducting material and inorganic filler, any known additives, such as polytetrafluoroethylene (PTFE), silicone, molybdenum sulfide, (MoS₂), and metal soap, in an adequate amount. Moreover, the above-mentioned conducting material and inorganic filler may be given surface treatment with silane coupling agent or titanate coupling agent.

The mixed resin compound pertaining to the present invention is a mixture prepared by mixing the above-mentioned base resin with the above-mentioned slow-crystallizing resin to form a skin layer, both resins in pellet form. The resulting mixture of pellets is fed as such into an injection molding machine. The mixing of pellets may be accomplished by using any known mixing machine such as tumblers capable of dry blending. In the case where the mixed resin compound is incorporated with the above-mentioned inorganic fillers (such as conducting material and reinforcing material), it is desirable (although not mandatory) that they should be preliminarily incorporated into the pellets of the base resin by kneading. Injection molding may be carried out under ordinary conditions (in terms of temperature and pressure).

The mixed resin compound pertaining to the present invention will find use in various applications. Due to the fact that it forms a skin layer on its molded product and hence it provides a smooth surface even thought it is incorporated with additives (such as conducting material and reinforcing material), its preferred applications include the cylindrical base for the photosensitive drum which needs good chemical resistance, mechanical strength, and surface smoothness.

The photosensitive drum just mentioned above consists of a cylindrical base 1 and a photosensitive layer 3 formed on its outer surface as shown in Fig. 1. The cylindrical base 1 is obtained by molding from the mixed resin compound pertaining to the first aspect of the present invention. Usually, the mixed resin compound contains the above-mentioned conducting material so that it has adequate conductivity and also contains the above-mentioned inorganic filler for reinforcement. Their mixing conditions are as mentioned above.

The photosensitive drum shown in Fig. 1 is constructed such that the cylindrical base 1 has separately molded flanges 2a and 2b firmly fitted into both ends thereof. Either of the flanges 2a and 2b may be formed integrally with the cylindrical base 1 from the electrically conductive resin compound pertaining to the present invention. In this case, it is possible to form the driving gear 6 integrally with the cylindrical base from the mixed resin compound pertaining to the present invention because the mixed resin compound pertaining to the first aspect of the present invention gives a molded product having high strength and stiffness when it is incorporated with a reinforcing inorganic filler.

The outer surface of the cylindrical base 1 should preferably (although not mandatory) have a surface roughness such that the center line average height (Ra) is equal to or smaller than 0.8 µm, particularly equal to or smaller than 0.2 µm, the maximum height (Rmax) is equal to or smaller than 1.6 µm, particularly equal to or smaller than 0.8 µm, and the ten-point average height (Rz) is equal to or smaller than 1.6 µm, particularly equal to or smaller than 0.8 µm. With excessively large values of Ra, Rmax,- and Rz, the outer surface of the cylindrical base 1 has surface irregularities which manifest themselves through the photosensitive layer 3 formed thereon. Such surface irregularities cause poor images. The above-mentioned desirable surface smoothness can be easily achieved by using the mixed resin compound pertaining to the first aspect of the present invention even though the resin compound is incorporated with an inorganic filler for reinforcement.

The photosensitive layer 3 on the outer surface of the cylindrical base 1 may be formed in any known layer structure from any known material.

The structure of the photosensitive drum is not limited to the one shown in Fig. 1. For example, the flanges 2a and 2b may have protruding shafts instead of the holes 5 to receive shafts. The protruding shafts permit the photosensitive drum to be rotatably mounted on the electrophotographic apparatus. The shape of the flanges 2a and 2b and the method of driving the photosensitive drum and other structure may be changed in any manner within the scope of the present invention.

### EXAMPLES

The invention will be described in more detail with reference to the following examples and comparative examples which are not intended to restrict the scope of the present invention.

### Example 1 and Comparative Examples 1 to 3

A mixture of pellets of different kind was prepared from a base resin in pellet form and a resin material A in pellet form (both having the composition shown below) by dry blending in a tumbler. Also, a mixed resin in pellet form was prepared from the above-mentioned base resin and resin material A by uniform extrusion-mixing in a twin-screw extruder and ensuing palletizing. Each sample was injection-molded into a cylindrical base for the photosensitive drum, measuring 30 mm in outside diameter, 275 mm in length, and 2 mm in wall thickness. Injection molding employed the same mold. Base polymer:
Nylon-66 ("Novamide" from Mitsubishi Enpla) 73 weight%
Carbon black ("Ketjen black" from Lion) 12 weight%
Potassium titanate whisker ("Dentol" from Outsuka Kagaku) 15 weight%

### Resin material A:

Nylon MXD6 ("Reny" from Mitsubishi Enpla)

### Dry blending:

Two kinds of pellets of the same size were mixed for 15 minutes in a tumbler (200 liters) turning at about 50 rpm. The mixed pellets were melted in a molding machine and the melt was blended in its molten state by the screw of the molding machine, and the melt mixture was finally injection molded.

### Uniform mixing:

This is common practice to prepare a resin compound. Two kinds of resins (in pellet or powder form) and inorganic fillers were fed into a twin-screw extruder for mixing, and the extrudate was pelletized. The thus obtained pellets of mixed resin were fed into a molding machine. Uniform mixing differs from dry blending in that the resulting mixture is in the form of pellet of one kind.

The cylindrical base thus obtained was measured for surface roughness (center line average height (Ra) and maximum height (Rmax)). This measurement was carried out according to JIS B0601 by using a surface roughness meter "Surfcom" made by Tokyo Seimitshusha. The results are shown in Table 2.

**Table 2**

| | Base material (welght%) | Resin A (weight%) | Blending method | Surface roughness (µm) | | Rating |
|---|---|---|---|---|---|---|
| | | | | Ra | Rmax | |
| Example 1 | 85 | 15 | Dry blending | 0.03 | 0.37 | Good |
| Comparative Example 1 | 100 | 0 | - | 0.25 | 1.34 | Poor |
| Comparative Example 2 | 85 | 15 | Uniform mixing | 0.16 | 0.88 | Poor |
| Comparative Example 3 | 80 | 20 | Uniform mixing | 0.1 | 0.66 | Poor |

It is noted from Table 2 that the cylindrical base formed from mixed pellets (prepared by dry blending according to the present invention) is superior in surface smoothness to the one formed from a mixed resin prepared by uniform mixing in Comparative Example.

## Claims

1. A mixed resin compound in a desired shape formed by injection molding from a molding material containing a mixed resin comprising:
(A) at least one resin component selected from a polyamide resin obtained from metaxylylenediamine and adipic acid, a polyamide resin obtained from ε-caprolactam, and an alloy resin obtained by blending a polyamide resin with a resin having a water absorption, measured according to ASTM D-570, no higher than 0.3%, and
(B) at least one other resin having a different rate of crystallization to that in (A),
wherein said resins are mixed in pellet form and the resulting mixture of pellets is injection-molded as such.

2. The mixed resin compound as defined in Claim 1, which contains an electrically conducting material dispersed therein.

3. The mixed resin compound as defined in Claim 2, which contains carbon black as the electrically conducting material.

4. The mixed resin compound as defined in Claim 3, which contains the carbon black in an amount of 5-30 weight%.

5. The mixed resin compound as defined in any one of Claims 1 to 4, which contains a reinforcing inorganic filler.

6. The mixed resin compound as defined in Claim 5, which contains the reinforcing inorganic filler in an amount of 1-30 weight%.

7. A photosensitive drum consisting of a cylindrical base and a photosensitive layer formed on the outer surface thereof, wherein the cylindrical base is formed from the mixed resin compound as defined in Claim 1.

## Patentansprüche

1. Mischharzverbindung in gewünschter Gestalt, die durch Spritzguss aus einer Formmasse geformt ist, die ein Folgendes umfassendes Mischharz enthält:
(A) zumindest eine Harzkomponente, ausgewählt aus einem aus m-Xylylendiamin und Adipinsäure erhaltenen Polyamidharz, einem aus ε-Caprolactam erhaltenen Polyamidharz und einer durch Mischen eines Polyamidharzes mit einem Harz mit einem gemäß ASTM D-570 gemessenen Wasserabsorptionsvermögen von nicht mehr als 0,3 % erhaltenen Harzmischung, und
(B) zumindest ein weiteres Harz mit einer unterschiedlichen Kristallisationsgeschwindigkeit als (A),
worin die Harze in Form von Pellets vermischt sind und das resultierende Pelletgemisch als solches spritzgegossen wird.

2. Mischharzverbindung nach Anspruch 1, in der ein elektrisch leitfähiges Material dispergiert ist.

3. Mischharzverbindung nach Anspruch 2, die Ruß als elektrisch leitfähiges Material enthält.

4. Mischharzverbindung nach Anspruch 3, die den Ruß in einer Menge von 5 bis 30 Gew.-% enthält.

5. Mischharzverbindung nach einem der Ansprüche 1 bis 4, die einen anorganischen Verstärkerfüllstoff enthält.

6. Mischharzverbindung nach Anspruch 5, die den anorganischen Verstärkerfüllstoff in einer Menge von 1 bis 30 Gew.-% enthält.

7. Lichtempfindliche Trommel, bestehend aus einer zylindrischen Basis und einer auf deren Außenfläche ausgebildeten lichtempfindlichen Schicht, worin die zylindrische Basis aus einer in Anspruch 1 definierten Mischharzverbindung ausgebildet ist.

## Revendications

1. Composé de résine mixte sous une forme voulue formée par moulage par injection à partir d'une matière moulable contenant une résine mixte, comprenant :
(A) au moins un composant résine choisi parmi une résine de polyamide obtenue à partir de métaxylylène diamine et d'acide adipique, une résine de polyamide obtenue à partir de ε-caprolactame, et une résine alliée obtenue en mélangeant une résine de polyamide avec une résine ayant une absorption d'eau, mesurée suivant ASTM D-570, non supérieure à 0,3%, et
(B) au moins une autre résine ayant un taux de cristallisation différent de celui de (A),
dans laquelle lesdites résines sont mélangées sous forme de granulés et le mélange de granulés ainsi obtenu est moulé par injection tel quel.

2. Composé de résine mixte selon la revendication 1, dans lequel est contenu un matériau électriquement conducteur.

3. Composé de résine mixte selon la revendication 2, qui contient du noir de carbone comme matériau électriquement conducteur.

4. Composé de résine mixte selon la revendication 3, qui contient le noir de carbone en une quantité de 5 à 30% en poids.

5. Composé de résine mixte selon l'une quelconque des revendications 1 à 4, qui contient une matière de charge inorganique de renfort.

6. Composé de résine mixte selon la revendication 5, qui contient la matière de charge inorganique de renfort en une quantité de 1 à 30% en poids.

7. Tambour photosensible constitué par une base cylindrique et une couche photosensible formée sur sa surface extérieure, dans lequel la base cylindrique est formée à partir du composé de résine mixte selon la revendication 1.
